Europäisches Patentamt

European Patent Office

Office européen des brevets

(19)

(11) Numéro de publication : **0 341 118 B1**

# FASCICULE DE BREVET EUROPEEN

(12)

(45) Date de publication du fascicule du brevet :
24.06.92 Bulletin 92/26

(51) Int. Cl.⁵ : **C01B 3/36**, F23D 14/22

(21) Numéro de dépôt : **89401114.7**

(22) Date de dépôt : **20.04.89**

(54) **Brûleur pour la fabrication de gaz de synthèse comportant un élément massif ayant des trous.**

(30) Priorité : **02.05.88 FR 8805960**

(43) Date de publication de la demande :
**08.11.89 Bulletin 89/45**

(45) Mention de la délivrance du brevet :
**24.06.92 Bulletin 92/26**

(84) Etats contractants désignés :
**DE GB IT**

(56) Documents cités :
**EP-A- 0 272 986**
**US-A- 2 725 933**

(73) Titulaire : **INSTITUT FRANCAIS DU PETROLE**
**4, Avenue de Bois Préau**
**F-92502 Rueil-Malmaison (FR)**

(72) Inventeur : **Gateau, Paul**
**26, rue de la Fontaine des Veaux**
**F-78860 Saint Nom la Breteche (FR)**
Inventeur : **Maute, Michel**
**18, rue des Nymphéas**
**F-78340 Les Clayes Sous Bois (FR)**
Inventeur : **Feugier, Alain**
**3, ruelle du Moulle**
**Morainvilliers F-78630 Orgeval (FR)**

EP 0 341 118 B1

Jouve, 18, rue Saint-Denis, 75001 PARIS

## Description

La présente invention concerne un brûleur pour réacteur chimique, notamment de fabrication de gaz de synthèse.

Ce brûleur permet d'acheminer séparément dans la zone réactionnelle plusieurs fluides.

Le brûleur selon la présente invention peut être utilisé notamment dans le procédé d'oxydation partielle d'hydrocarbures, par voie de flamme, et destiné à fabriquer du gaz de synthèse. On citera que des procédés de ce type sont déjà appliqués par Texaco, Shell... . Par gaz de synthèse, on entend ici un mélange d'H2, de CO, ainsi que de N2, CO2, vapeur d'eau... .

Le réacteur destiné à cet usage est constitué d'un brûleur et d'une chambre de combustion. Le dispositif de trempe (Quench) des gaz peut également être une partie intégrante du réacteur. Après la combustion on peut également mettre un garnissage, catalyseur ou autre, dans le réacteur.

Le brûleur selon la présente invention peut être alimenté par un combustible, gazeux, liquide ou solide en suspension et par un comburant, de l'air, de l'oxygène ou de l'air enrichi. De la vapeur d'eau peut être ajoutée en proportion variable, au comburant ou plus généralement au combustible. Les gaz introduits peuvent être plus ou moins préchauffés. Le préchauffage accroît le rendement du réacteur.

A titre d'exemple, le rendement optimal est obtenu avec du gaz naturel, de l'air et de la vapeur d' au, pour un rapport O2/C compris entre 0,60 et 0,65 et cela pour des opérations sous pression. Avec un préchauffage supérieur à 500,C le rapport H2O/C a peu d'influence entre 0,05 et 3. Il est optimal vers 1. La vapeur d'eau réduit la formation des suies.

Pour des usages particuliers, le rapport O2/C peut aller en-dessous de 0,6 et au-delà de 0,65 (jusqu'à 1 par exemple).

Les procédés modernes opèrent sous des pressions qui peuvent atteindre 80 bars.

La combustion est globalement adiabatique.

Elle doit effectuer la réaction théorique :

$$CxHy + x/2\ O2 \rightarrow x\ CO + y/2\ H2$$

mais s'accompagne toujours de formation de CO2 et d'H2O en proportions variables. De ce fait on peut localement dépasser les températures d'équilibre adiabatique. Ainsi avec de l'oxygène pur, localement, on peut rencontrer des températures très supérieures à 1500°C.

Le document US-2.725.933 décrit un brûleur pour un réacteur de gaz de synthèse permettant d'acheminer séparément dans une zone réactionnelle au moins deux fluides, l'un servant de combustible et l'autre de comburant, et comportant un élément massif dans lequel sont compris des trous débouchant à l'une de leurs extrémités, dans le réacteur et à l'autre extrémité soit dans des moyens d'alimentation en combustible, soit dans des moyens d'alimentation en comburant.

Les brûleurs proposés sont en général tubulaires ou plus complexes. La technologie la plus simple est représentée par 2 tubes concentriques. Dans ce cas les tubes ont des dimensions (plusieurs dizaines de mm) très supérieures aux épaisseurs de front de flammes. Il est alors indispensable de laisser s'écouler un temps de séjour important (de l'ordre de la seconde et plus) pour atteindre l'équilibre thermodynamique. Le réacteur comporte alors des zones de forte hétérogénéité avec recirculation de gaz en combustion.

La multiplicité des tubes assurerait une meilleure homogénéité mais le nombre de tubes reste limité pour les applications industrielles. De plus la réalisation industrielle en céramique reste délicate avec les tubes.

Les tubes métalliques reçoivent les impacts des noyaux de recirculation de gaz chauds et leur tenue en est affectée s'il n'y a pas de refroidissement.

La présente invention propose un brûleur à trous qui évite ces inconvénients.

Le brûleur comporte des orifices débouchant à des profondeurs différentes selon la nature du fluide que l'on souhaite y introduire.

Le brûleur peut être formé d'une pièce unique ou de la juxtaposition ou superpositions de plusieurs éléments.

Ces éléments peuvent être métalliques, en céramique, ou en tout autre matériau réfractaire.

De plus la présente invention permet de réaliser facilement un grand nombre de trous alors que l'emploi des tubes (en nombre comparable) est délicat.

La présente invention permet la mise en oeuvre de brûleur de grande taille. Elle permet également d'acheminer vers la zone réactionnelle, sans complication, de plus de 2 fluides au nez de brûleur.

Ceci donne une souplesse de réglage supplémentaire dans le cas du gaz de synthèse mais peut également être employé à d'autres fins : par exemple l'arrivée de carburant et comburant par 2 types d'orifices pour mieux maîtriser les flammes dans leur forme, nature ou composition.

Ainsi la présente invention permet d'acheminer un troisième produit par les orifices d'un troisième type, ce troisième produit pouvant être destiné à réagir dans la flamme.

La présente invention permet de maintenir facilement l'étanchéité à chaud du brûleur.

De plus le brûleur selon la présente invention est facile à usiner lorsqu'il comporte plusieurs blocs et il présente une bonne tenue à la température élevée pour des éléments en matériaux céramique.

Le brûleur selon l'invention peut être utilisé pour préchauffer directement les fluides.

Le brûleur selon l'invention peut être refroidi aisément dans le cas de pièces métalliques.

Le brûleur selon l'invention convient parfaitement pour réaliser la fabrication de gaz de synthèse à partir d'oxygène et de méthane.

Le brûleur selon la présente invention peut être avantageusement appliqué au procédé et au dispositif décrit dans la demande de brevet Européen EP-A 272 986 déposé le 18 décembre 1987.

Ainsi la présente invention concerne un brûleur pour réacteur de fabrication de gaz de synthèse permettant d'acheminer séparément, dans une zone réactionnelle, au moins deux fluides, l'un servant de combustible et l'autre de comburant. Ce brûleur comporte un élément massif dans lequel sont compris des trous débouchant à l'une de leurs extrémités dans le réacteur et à l'autre soit dans des moyens d'alimentation en combustible soit dans des moyens d'alimentation en comburant selon le fluide acheminé par le trou considéré.

Conformément à l'invention, un ensemble de trous est destiné à acheminer l'un au moins des deux fluides, les trous pénétrant dans l'élément massif à des hauteurs différentes.

Au moins l'un des ensembles de trous servant à l'alimentation d'un même fluide pourra déboucher à une même profondeur dans les moyens d'alimentation concernés.

L'un des moyens d'alimentation pourra comporter une capacité délimitée en partie par l'une des faces de l'élément massif.

L'un des moyens d'alimentation pourra comporter un réseau de canaux joignant entre eux, à travers l'élément massif au moins certains des trous servant à acheminer un même fluide.

Le réseau de canaux pourra comporter des passages qui communiquent entre eux sensiblement au voisinage de la partie centrale de l'élément massif.

L'élément massif pourra comporter plusieurs blocs superposés.

Au moins l'un des blocs pourra comporter des rainures ou des encoches servant à l'alimentation d'au moins certains des trous d'acheminement de fluide.

L'élément massif pourra comporter un circuit de circulation d'un fluide caloporteur, ou réfrigérant.

Certains au moins des trous pourront être réalisés par des perçages.

Le brûleur pourra comporter un matériau céramique.

La présente invention sera mieux comprise et ces avantages apparaitront plus clairement à la description qui suit d'exemples particuliers nullement limitatifs illustrés par les figures, ci-annexées, parmi lesquelles :

    – la figure 1 représente shématiquement un brûleur acheminant deux fluides séparement vers la zone réactionnelle.

    – la figure 2 concerne le cas où l'on achemine trois fluides.

    – la figure 3 illustre schématiquement de cas où le brûleur achemine deux fluides vers la zone réactionnelle et où il comporte un circuit de circulation d'un fluide de refroidissement.

    – les figures 4 et 5 montrent le cas d'un brûleur comportant au moins deux blocs et des rainures.

    – les figures 6, 7 et 8 représentent le cas d'un brûleur comportant au moins deux blocs assemblés par des plots.

    – les figures 9, 10, 11 et 12 montrent un brûleur comportant trois blocs permettant l'acheminement de trois fluides différents vers la zone réactionnelle.

    – la figure 13 illustre un brûleur monobloc permettant d'acheminer trois fluides vers la zone réactionnelle.

    – la figure 14 représente un brûleur monobloc d'une mise en oeuvre relativement simple.

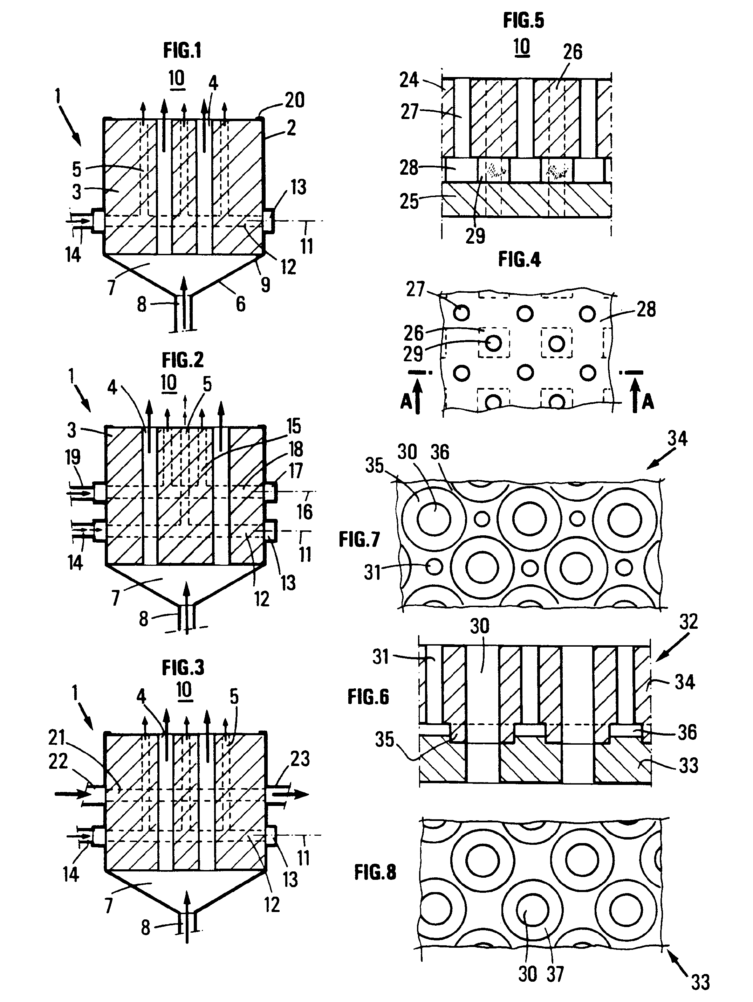

La référence 1 de la figure 1 désigne un brûleur dans son ensemble.

Ce brûleur comporte un logement 2 dans lequel est placé un élément massif 3 qui comporte les différents trous de passage des gaz.

Sur la figure 1 l'élément massif comporte des trous 4 pour acheminer un premier fluide et des trous 5 pour acheminer un deuxième fluide. Ces trous acheminement les gaz vers une zone réactionnelle 10.

Dans le cas de la figure 1 le logement 2 comporte à sa partie inférieur une forme tronconique 6 qui délimite avec l'élément massif 3 une chambre 7 qui peut servir de chambre d'alimentation des trous 4 en premier fluide. Le conduit 8 alimente la chambre 7 en premier fluide.

Bien entendu cette chambre 7 peut avoir d'autres formes qu'une forme tronconique.

L'élément massif 3 repose, dans le cas de la figure 1, sur une butée 9 qui peut être formée toujours dans le cas de la figure 1 par la zone périphérique supérieure de la chambre tronconique 7.

Les trous 4 d'acheminement du premier fluide traversent de part en part l'élément massif 3 permettant ainsi le transfert du fluide entre la chambre tronconique 7 et la zone réactionnelle 10.

Les trous 5 d'acheminement du deuxième fluide s'étendent de la zone réactionnelle 10 vers un niveau intermédiaire 11.

Dans le cas de la figure 1 les trous 5 s'arrêtent tous sensiblement au même niveau intermédiaire 11.

Ces trous 5 communiquent entre eux par des canaux ou trous tranversaux 12.

Bien entendu ces trous transversaux 12 ne traversent pas les trous 4 d'acheminement du premier fluide.

Dans le cas de la figure 1 les trous transversaux 12 communiquent avec une chambre 13 qui peut être annulaire notamment dans le cas où le logement 2 a avantageusement une forme cylindrique.

Cette chambre 13 est alimentée par un deuxième fluide par le conduit 14.

L'étanchéité entre le circuit d'alimentation en premier fluide et le circuit d'alimentation en deuxième fluide peut être assurée par la précision du montage de l'élément massif 3 dans le logement 2 ou par l'utilisation de joints d'étanchéité, ou même par des soudures.

La figure 2 représente un autre exemple qui diffère de l'exemple précédent en ce qu'il comporte des trous 15 d'acheminement d'un troisième fluide.

Les trous 15 sont alimentés par une chambre 17 du même type que la chambre 13 mais située à un autre niveau que celle-ci.

Les trous 15 s'arrêtent à un niveau intermédiaire 16 différent du niveau 11 de la chambre intermédiaire 13.

Cette chambre 17, communique avec les trous 15 par l'intermédiaire de canaux ou trous transversaux 18.

Bien entendu les circuits du premier, deuxième et troisième fluide ne se croisent pas mais débouchent tous les trois dans la zone réactionnelle 10.

La référence 19 désigne le conduit d'alimentation de la chambre 17 en troisième fluide.

Comme cela a déjà été dit l'étanchéité entre les différents circuits peut être réalisée soit par un montage précis de l'élément 3 dans le logement 2 soit par l'utilisation de joints, ou même par des soudures.

La référence 20 désigne une bride de maintien de l'élément massif 3.

La figure 3 concerne un brûleur qui diffère de l'exemple correspondant à la figure 1 par la présence d'un circuit de refroidissement.

Sur les figures 1, 2 et 3 les parties identiques portent les mêmes références.

Les canaux ou trous 21 sont de passages transversaux qui ne communiquent pas avec la zone réactionnelle 10.

Ces canaux servent à la circulation d'un fluide caloporteur ou réfrigérant.

Cette circulation permet de refroidir l'élément massif, ou de les réchauffer.

Ces canaux 21 sont alimentés en fluide caloporteur à partir d'une conduite 22. Le conduit 23 désigne le conduit d'évacuation du fluide caloporteur circulant dans les trous 21.

Les trous de fluide caloporteur peuvent être alimentés par une chambre d'alimentation et être vidés par une autre chambre, ces deux chambres étant distinctes de manière à ce qu'il y ait effectivement circulation du fluide caloporteur dans l'élément massif 3.

Bien entendu le circuit de fluide caloporteur ne communique pas avec les autres circuits de circulation de fluide.

L'élément massif 3 peut être réalisé par l'utilisation d'un seul bloc ou par l'utilisation de plusieurs blocs superposés.

Dans le cas où l'élément massif 3 est réalisé en utilisant un seul bloc les trous d'acheminement des différents fluides, ainsi que les trous ou canaux transversaux peuvent être réalisés par des perçages.

La figure 5 illustre le cas d'un élément massif 3 comportant deux blocs 24 et 25 superposés.

La figure 4 est une vue du dessus partielle, de la figure 5 qui elle même est une coupe partielle AA de la figure 4.

Les trous 26 servent à l'acheminement du premier fluide vers la zone réactionnelle et les trous 27 à celui du deuxième fluide vers cette même zone.

Le bloc 24 ou bloc supérieur comporte des trous 27 sensiblement sur toute leur longueur et des trous 26 sur une partie de leur longueur uniquement tandis que le bloc 25 ou bloc inférieur comporte uniquement une partie de la longueur des trous 26.

Ainsi dans ce mode de réalisation (figure 4 et 5) l'assemblage des blocs 24 et 25 fait apparaître les trous 26 sur toute leur longueur. Bien entendu l'assemblage des blocs 24 et 25 doit être réalisé pour qu'il y ait correspondance entre les portions des trous 26 contenues dans le bloc supérieur 24 et les portions de ces mêmes trous contenues dans le bloc inférieur 25.

Des rainures ou encoches 28 sont pratiquées dans le bloc supérieur 24 au niveau de sa face d'appui 29 avec le bloc inférieur 25.

Dans le cas des figures 4 et 5 ces rainures sont perpendiculaires entre elles, et permettent de réaliser une communication entre les différents trous 27 d'acheminement du deuxième fluide.

Bien entendu la forme des rainures et leur disposition peuvent être différentes de celles représentées au figures 4 et 5 dès l'instant où elles permettent l'alimentation des différents trous d'acheminement du deuxième fluide à partir de la chambre d'alimentation.

Les rainures 28 sont prévues pour ne pas pénétrer dans les trous 26 d'acheminement du premier fluide. Ainsi les tous 26 sont entourés d'une épaisseur suffisante de matière 29.

Bien entendu ou ne sortira pas du cadre de la présente invention si les rainures sont pratiquées sur le bloc inférieur ou partiellement sur les deux blocs.

Les figures 6, 7 représentent un autre mode de réalisation.

La référence 30 désigne les trous d'acheminement du premier fluide et la référence 31 les trous d'acheminement du deuxième fluide.

L'élément massif 32 qui comprend ces trous 30 et 31 comporte deux blocs 33 et 34 l'un 34 étant placé au dessus de l'autre 33 voir figure 6.

La figure 7 représente le bloc supérieur 34 en vue partielle du dessous et la figure 8 une vue partielle du dessus du bloc inférieur 33.

Le bloc supérieur comporte des bossages 35 ou plots qui entourent sur une portion de leur longueur les trous d'acheminement du premier fluide.

Lorsque le bloc supérieur 34 est placé sur le bloc inférieur 33 les zones libres 36 entre les bossages 35 délimitent un réseau d'alimentation des trous 31 d'acheminement du deuxième fluide.

La superposition des deux blocs 34 et 33 se fait de tel sorte que la portion de longueur des trous d'acheminement du premier fluide qui se trouve dans le bloc supérieur 34 soit vis à vis de la portion de la longueur de ce même trou se trouvant sur le bloc inférieur 33.

Une façon de garantir la coincidence des portions de longueur des trous d'acheminement du premier fluide est de prévoir sur le bloc inférieur 33 des lamages 37 dans lesquels viennent pénétrer une partie seulement des bossages 35 de manière à ménager un espace suffisant pour la circulation du deuxième fluide alimentant les trous 31 d'acheminement du deuxième fluide.

L'alimentation du réseau d'alimentation délimité par les espaces libres 36 peut être effectué par des chambres éventuellement annulaires de la même manière que dans le cas de l'exemple de la figure 1.

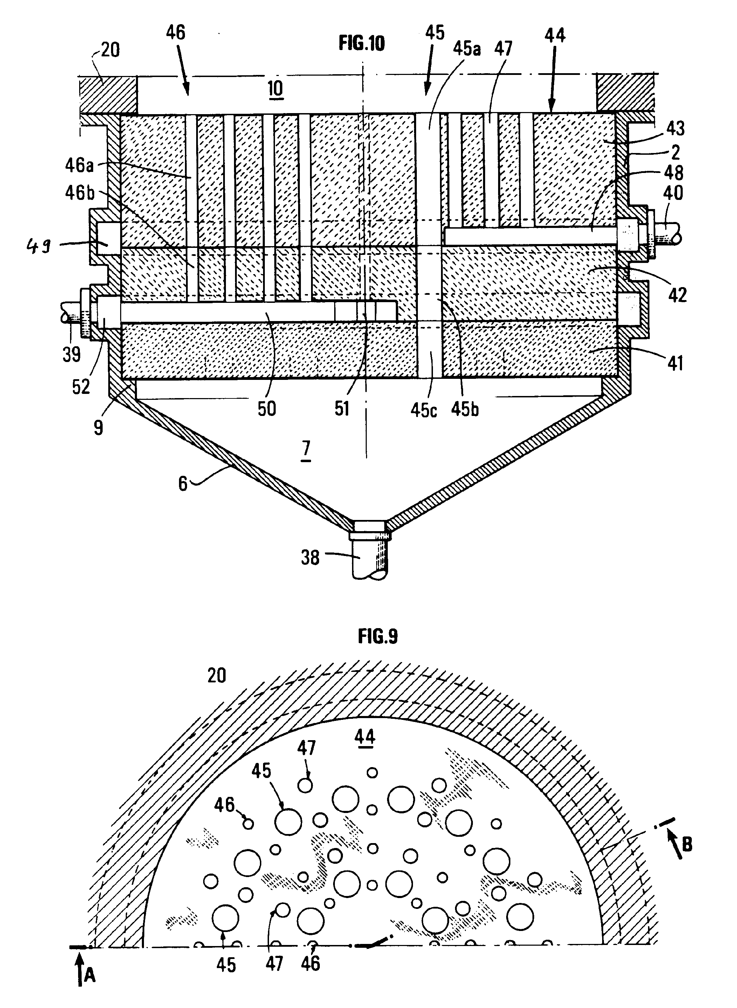

Les figures 10 et 12 illustrent un exemple de réalisation de brûleur pour lequel l'acheminement séparé de fluides s'effectue à partir de trois arrivées différentes 38, 39 et 40, et qui comporte trois blocs 41, 42 et 43 formant l'élément massif 44. Les parties communes aux figures 10 et 1 à 3 portent les mêmes références numériques. Ainsi la référence 6 désigne la forme tronconique 7, la référence 9 désigne la butée d'appui de l'élément massif 44 et la référence 20 la bride de maintien.

Les fluides provenant par les arrivées 38, 39 et 40 sont respectivement désignés par premier fluide, deuxième fluide et troisième fluide.

La figure 9 représente une vue du dessus du brûleur de la figure 10 qui elle même est une vue en coupe selon la ligne AB de la figure 9.

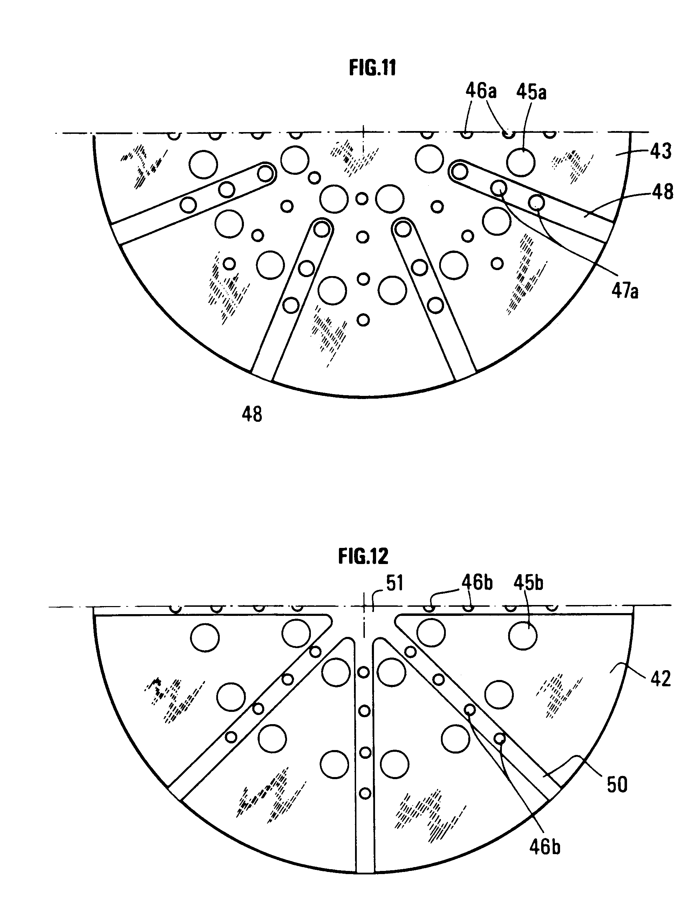

La figure 11 est une vue du dessous du bloc supérieur 43 et la figure 12 du bloc intermédiaire 43.

Les références 45, 46 et 47 désignent respectivement les trous d'acheminement du premier, deuxième et troisième fluide.

Le bloc supérieur 43 comporte les trous 47 d'acheminement du troisième fluide ainsi que des rainures 48 d'alimentation de ces trous 47 à partir de la chambre 49. Compte tenu de la forme des rainures 48 représentées à la figure 11 la chambre 49 doit alimenter toutes les rainures ceci peut être obtenu par une forme annulaire de cette chambre 49.

Selon une autre variante le bloc supérieur 43 peut avoir un épaulement sur sa face inférieure dans lequel débouche l'arrivée 49 et qui délimite avec une partie de la face supérieur du bloc intermédiaire et le logement 2 une chambre annulaire.

Le bloc supérieur 43 comporte sur une partie 46a de leur longueur les trous 46 d'acheminement du deuxième fluide. L'autre partie 46 b de ces trous est placée sur le bloc intermédiaire 42. Les trous 46 sont alimentés par des rainures 50 se trouvant sur la face inférieure du bloc intermédiaire 42 voir figure 12. Ces rainures forment un réseau d'alimentation des trous 46 à partir de l'arrivée 39 du deuxième fluide.

Sur la figure 12 on voit que les rainures 50 convergent à la partie centrale 51 du bloc intermédiaire 42.

Ainsi la chambre d'alimentation 52 peut être éventuellement réduite.

Les trous 45 d'acheminement du premier fluide traversent de part en part l'élément massif 44. Ils traversent sur une partie de leur longueur 45 a, 45 b et 45 c respectivement les blocs supérieur, intermédiaire et inférieur pour déboucher dans la chambre 7.

Bien entendu les blocs 41, 42 et 43 sont repérés et judicieusement placés lors de l'assemblage pour que les trous 45, 46 et soient correctement alimentés en fluide.

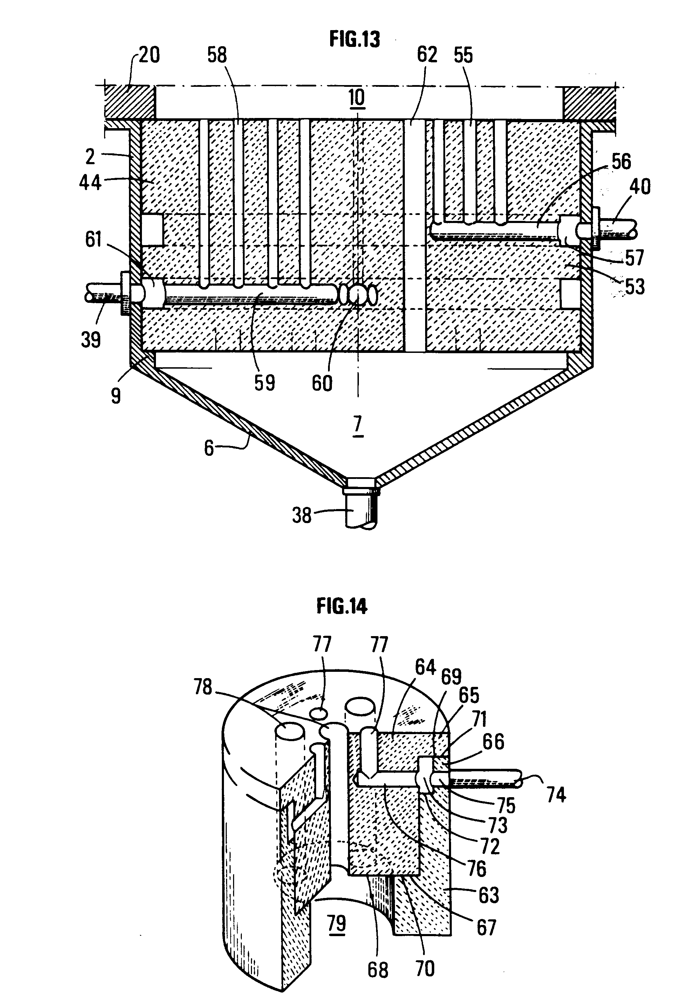

La figure 13 montre un mode de réalisation correspondant à celui de la figure 10 mais ne comportant qu'un seul bloc 53 formant l'élément massif 54. Cet élément comporte des perçages 55 formant les trous d'acheminement du troisième fluide qui croisent des perçages radiaux 56 d'alimentation de ces perçages 55.

Les perçages radiaux débouchent dans une gorge 57 qui est en relation avec l'arrivée 40 du troisième fluide.

Les trous 58 d'alimentation en deuxième fluide sont réalisés par des perçages axiaux qui débouchent dans des perçages radiaux 59 formant les canaux d'alimentation des trous 58 qu'ils croisent.

Les perçages radiaux 59 communiquent entre eux soit en débouchant dans la partie centrale 60, soit par une gorge 61 qui communique avec l'arrivée 39 du deuxième fluide.

Il est évident que les perçages 56 peuvent également être convergents et communiquer entre eux à la partie centrale de l'élément massif.

Il en est de même pour les rainures 8 de la figure 10.

Enfin le bloc unique de l'élément massif 44 représenté à la figure 13 comporte des perçages 62 qui le traversent de part en part et servent de trous d'acheminement en premier fluide.

Dans les modes de réalisation représentés aux figures 10 et 13 l'élément massif a une forme cylindrique et les trous d'alimentation sont généralement placés sur des demi-axes radiaux décalés les uns par rapport aux autres de manière à éviter l'interconnexion des trous servant à l'acheminement de fluides ne devant pas être melangés avant de déboucher dans la zone réactionnelle 10.

Il est bien évident qu'on ne sortira pas du cadre de la présente invention en réalisant des répartitions différentes des trous d'acheminement, dès l'instant où les réseaux d'alimentation en fluides ne communiquent pas entre eux. Ceci peut être obtenu par des tracés appropriés des canaux d'alimentation des trous d'acheminement, de tels tracés peuvent être facilement réalisés lorsque l'élément massif est composé par un enpilement de plusieurs blocs.

La figure 14 représente un mode de réalisation simple du dispositif selon l'invention.

Le brûleur comporte deux parties qui sont un logement 63 et un élément massif 64 ayant un collet 65 qui prend appui sur le bord supérieur 66 du logement 63.

Par ailleurs, le logement 63 comporte une butée d'appui 67 formée par un lamage.

La profondeur à laquelle est exécuté le lamage par rapport au bord supérieur 66 du logement 63 est tel qu'elle corresponde sensiblement à la hauteur séparant la face inférieur 68 de l'élément massif de la face inférieur 69 du collet 65 de ce même élément massif, avec l'interposition de joints 70 et 71 placées aux zones de contact.

L'élément massif 63 comporte un deuxième lamage 72 placé à un niveau supérieur au précédent de manière à former une chambre annulaire 73 alimentée à travers l'orifice 75 par une canalisation 74 d'amenée du deuxième fluide.

L'élément massif 64 comporte des perçages 76 qui peuvent être radiaux et qui communiquent avec la chambre 73 et avec des perçages 77 qui eux même peuvent être sensiblement axiaux, ces derniers formant les trous d'alimentation en deuxième fluide.

L'élément massif 64 comporte des perçages axiaux 78 qui forment les trous d'alimentation en premier fluide, celui-ci provenant de la chambre 79 placée sous l'élément massif 64.

Ce brûleur est d'une réalisation particulièrement simple.

Des essais ont été effectués avec un brûleur correspondant à celui de la figure 14 et réalisé en acier réfractaire , ils ont donné de bons résultats et le taux de suie a été divisé par un facteur de 10 par rapport à un brûleur comportant des tubes et opérant dans les mêmes conditions.

## Revendications

1. Brûleur pour réacteur de fabrication de gaz de synthèse permettant d'acheminer séparément dans une zone réactionnelle au moins deux fluides l'un servant de combustible et l'autre de comburant et comportant un élément massif dans lequel sont compris des trous débouchant à l'une de leurs extrémités dans le réacteur et à l'autre soit dans des moyens d'alimentation en combustible soit dans des moyens d'alimentation en comburant selon le fluide acheminé par le trou considéré, caractérisé en ce qu'un ensemble de trous est destiné à acheminer l'un au moins des deux fluides, les trous pénétrant dans l'élément massif à des hauteurs différentes.

2. Brûleur selon la revendication 1, caractérisé en ce que au moins l'ensemble des trous servant à l'alimentation d'un même fluide débouche à une même profondeur dans les moyens d'alimentation concernés.

3. Brûleur selon l'une des revendications précédentes, caractérisé en ce que l'un desdits moyens d'alimentation comporte une capacité délimitée en partie par l'une des faces dudit élément massif.

4. Brûleur selon l'une des revendications précédentes, caractérisé en ce que l'un desdits moyens d'alimentation comporte un réseau de canaux joignant, à travers ledit élément, au moins certains des trous servant à acheminer un même fluide, entre-eux.

5. Brûleur selon la revendication 4, caractérisé en ce que ledit réseau de canaux comporte des passages qui communiquent entre-eux sensiblement au voisinage de la partie centrale du dit élément massif.

6. Brûleur selon l'une des revendications précédentes, caractérisé en ce que ledit élément comporte plusieurs blocs superposés.

7. Brûleur selon la revendication 6, caractérisé en ce que au moins l'un desdits blocs comporte des rainures ou encoches servant à l'alimentation de certains au moins des dits trous d'acheminement de fluide.

8. Brûleur selon l'une des revendications 1 à 7, caractérisé en ce que ledit élément massif comporte un circuit de circulation d'un fluide caloporteur ou réfrigérant.

9. Brûleur selon l'une des revendications 1 à 8, caractérisé en ce que certains au moins desdits trous sont réalisés par des perçages.

10. Brûleur selon l'une des revendication 1 à 9, caractérisé en ce qu'il comporte un matériau céramique ou réfractaire.

## Patentansprüche

1. Brenner für Synthesegasreaktoren, der es ermöglicht, getrennt in einer Reaktionszone wenigstens zwei Fluide zu führen, von denen eines als Brennstoff und das andere als die Verbrennung bewirkendes Mittel dient und mit einem massiven Element, in welchem Löcher vorgesehen sind, die an einem ihrer Enden in den Reaktor und am anderen entweder in Brennstoffzuführungsmitteln oder in Mitteln zum Zuführen des die Verbrennung bewirkenden Mittels entsprechend dem durch das betrachtete Loch zugeführten Fluid münden, dadurch gekennzeichnet, daß eine Anordnung von Löchern dazu bestimmt ist, wenigstens eines der beiden Fluide zu führen, wobei die Löcher in das massive Element auf unterschiedlichen Höhen eindringen.

2. Brenner nach Anspruch 1, dadurch gekennzeichnet, daß wenigstens die zur Zuführung ein und desgleichen Fluids dienende Anordnung von Löchern auf ein und dergleichen Tiefe in die betrachteten Zuführungseinrichtungen mündet.

3. Brenner nach einem der vorhergehenden Ansprüche, dadurch gekennzeichnet, daß eine dieser Speiseeinrichtungen eine Kammer umfaßt, die zum Teil durch eine der Flächen dieses massiven Elements begrenzt ist.

4. Brenner nach einem der vorhergehenden Ansprüche, dadurch gekennzeichnet, daß eine dieser Speiseeinrichtungen ein Netz von Kanälen umfaßt, das quer durch dieses Element wenigstens gewisse der zur Führung ein und desgleichen Fluids dienende Löcher miteinander verbindet.

5. Brenner nach Anspruch 4, dadurch gekennzeichnet, daß dieses Netz von Kanälen Durchlässe umfaßt, die miteinander im wesentlichen benachbart dem Mittelteil dieses massiven Elements in Verbindung stehen.

6. Brenner nach einem der vorhergehenden Ansprüche, dadurch gekennzeichnet, daß dieses Element mehrere einander überlagerte Blöcke umfaßt.

7. Brenner nach Anspruch 6, dadurch gekennzeichnet, daß wenigstens einer dieser Blöcke Nuten oder Einschnitte umfaßt, die dazu dienen, wenigstens gewisse der fluidführenden Löcher zu speisen.

8. Brenner nach einem der Ansprüche 1 bis 7, dadurch gekennzeichnet, daß das massive Element einen Zirkulationskreis eines Wärmeträgerfluids oder Kühlmittels umfaßt.

9. Brenner nach einem der Ansprüche 1 bis 8, dadurch gekennzeichnet, daß wenigsterns gewisse der Löcher durch Bohrungen realisiert sind.

10. Brenner nach einem der Ansprüche 1 bis 9, dadurch gekennzeichnet, daß er ein keramisches oder feuerfestes Material aufweist.

## Claims

1. A burner for a reactor producing synthetic gas for conveying separately to a reaction zone at least two fluids, one serving as a combustible and the other as an oxidant, characterised in that it comprises a solid element with holes penetrating to different depths, wherein these holes open at one of their ends into the reactor and at the other either into the means for supplying the combustible or the means for supplying the oxidant depending on the fluid being conveyed through the hole considered.

2. Burner in accordance with claim 1, characterised in that at least one of the assemblies of holes used to supply a same fluid opens onto the supply means concerned at the same depth.

3. Burner in accordance with one of the previous claims, characterised in that one of the supply means comprises a capacity delimited partially by one of the surfaces of the solid element.

4. Burner in accordance with one of the previous claims, characterised in that one of the supply means

7

comprises a network of channels joining each other across the element, wherein at least some of the holes are used to convey a same fluid.

5. Burner in accordance with claim 4, characterised in that the network of channels has passages which communicate with each other substantially in the area around the central part of the solid element.

6. Burner in accordance with one of the previous claims, characterised in that the element comprises several superposed blocks.

7. Burner in accordance with claim 6, characterised in that at least one of the blocks has grooves or notches used for supplying at least some of the fluid supply holes.

8. Burner in accordance with one of claims 1 to 7, characterised in that the solid element has a circulation circuit for a heat-carrying or coolant fluid.

9. Burner in accordance with one of claims 1 to 8, characterised in that at least some of the holes are formed by bores.

10) Burner in accordance with one of claims 1 to 9, characterised in that it is made of a ceramic or refractory material.

FIG.1

FIG.2

FIG.3

FIG.5

FIG.4

FIG.7

FIG.6

FIG.8

EP 0 341 118 B1

**FIG.10**

**FIG.9**

**FIG.11**

**FIG.12**

**FIG.13**

**FIG.14**